# EUROPÄISCHE PATENTSCHRIFT

(11) **EP 0 333 275 B1**
(45) Veröffentlichungstag und Bekanntmachung des Hinweises auf die Patenterteilung: **02.03.1994**
(21) Anmeldenummer: 89200619.8
(22) Anmeldetag: 13.03.1989
(51) Int. Cl.: H04N 5/63, H02M 3/335

(54) **Stromversorgungsanordnung**
Power supply device
Dispositif d'alimentation de puissance

(30) Priorität: 17.03.1988 DE 3808863
(43) Veröffentlichungstag der Anmeldung: 20.09.1989
(73) Patentinhaber: Philips Patentverwaltung GmbH, 22335 Hamburg (DE); Philips Electronics N.V., 5621 BA Eindhoven (NL)
(72) Erfinder: Hahn, Friedrich, D-2000 Schenefeld (DE); Kording, Friedrich, D-2000 Hamburg (DE)
(74) Vertreter: Peters, Carl Heinrich, Dipl.-Ing.

(56) Entgegenhaltungen:
- EP-A- 0 158 251
- EP-A- 0 265 322

## Beschreibung

Die Erfindung bezieht sich auf eine Stromversorgungsanordnung gemäß dem Oberbegriff des Hauptanspruchs.

Aus dem VALVO-Datenbuch "Integrierte Analogschaltungen für Fernseh- und Videogeräte", 1987, Seiten 285 bis 294, ist eine Steuerschaltung für eine Stromversorgungsanordnung nach Art eines Schaltnetzteils in Farbfernsehgeräten bekannt, die als monolithisch integrierte Schaltung aufgebaut ist. Bei dieser Steuerschaltung ist ein sogenannter "Stand-by-Betrieb" vorgesehen, in dem die Steuerschaltung einen Netzteil-Schalttransistor ansteuert, durch den periodisch ein Strom aus einem Netzgleichrichter durch eine Primärwicklung eines Zeilentransformators geleitet und dadurch auf der Sekundärseite des Zeilentransformators eine Versorgungsspannung erzeugt wird, mit der ein Mikroprozessor gespeist wird, durch den die Funktion des Fernsehgerätes gesteuert wird, und zwar sowohl die Einstellung der zu empfangenden Programme als auch Einstellungen für Tonlautstärke, Bildhelligkeit usw. In einem sogenannten "Normalbetrieb" werden auch alle übrigen Schaltungsteile des Farbfernsehgerätes aus dem Zeilentrafo mit Energie versorgt. Sie sind durch den Mikroprozessor an die Stromversorgungsanordnung anschaltbar.

Im "Stand-by-Betrieb" ist zwar die Bild- und Tonwiedergabe des Fernsehgerätes durch den Mikroprozessor abgeschaltet, dieser bleibt selbst jedoch in Betrieb, um über ihn ein Wiedereinschalten des Fernsehgerätes vornehmen zu können. Diese Betriebsart findet bei Fernsehgeräten mit Fernbedienung Anwendung, und im "Stand-by-Betrieb" wird dann auch der Fernbedienungsempfänger im Fernsehgerät weiterhin mit Strom versorgt, um das Wiedereinschalten des Gerätes jederzeit über die Fernbedienung vornehmen zu können. Im "Stand-by-Betrieb" bleiben also das Schaltnetzteil mit der Steuerschaltung, der Mikroprozessor und der Fernbedienungsempfänger durchgehend im Betrieb und benötigen dafür eine nicht unbeträchtliche elektrische Leistung. Außer Kosten für den Stromverbrauch wird das Gerät dadurch auch unnötigt erwärmt und es werden nicht benötigte Schaltungsteile mit elektrischer Spannung beaufschlagt, wodurch die Gefahr eines Geräteschadens sowie elektrischer Unfälle der Bedienungspersonen gegeben ist.

Aus der DE-C-34 12 341 ist ein aus dem 220 V-Netz gespeistes Fernsehgerät bekannt mit einer Auswerteschaltung 5, die das Fernsehgerät einschaltet, und einem Schaltnetzteil 12 mit einem "Stand-by-I-Zustand, einem "Stand-by-II-Zustand" und einem Normalbetrieb. Darin werden von einem Fernbedienungssignalverstärker Impulse an das Schaltnetzteil, die dieses in den "Stand-by-II-Zustand" bringen, und an die Auswerteschaltung übertragen. Die Energie für den kurzen Zeitraum des Einschaltens des Gerätes wird aus dem Elko eines Netzteils 4 geliefert. Der Fernbedienungssignalverstärker wird aus dem Netzteil 4 mit Energie gespeist.

Die Erfindung hat die Aufgabe, eine Stromversorgungsanordnung der eingangs genannten Art derart zu verbessern, daß für dadurch gespeiste Verbraucher einerseits die Vorteile eines "Stand-by-Betriebs" erhalten bleiben und andererseits die in dieser Betriebsart verbrauchte elektrische Leistung sowie die Zahl der durch Erwärmung oder Spannungsbeaufschlagung beanspruchten Bauteile verringert werden. Dabei sollen bereits vorhandene Baugruppen, insbesondere integrierte Schaltungen, in möglichst einfacher Weise verwendet werden können.

Diese Aufgabe wird erfindungsgemäß bei einer Stromversorgungsanordnung der eingangs genannten Art durch die Merkmale des kennzeichnenden Teils des Hauptanspruchs gelöst.

Bei der Anordnung aus dem Valvo-Datenbuch wird das Schaltsignal lediglich in der Schaltstufe ausgewertet, so daß diese in jeder Betriebsart, in der eine solche Auswertung möglich sein soll, mit elektrischer Energie versorgt werden muß. Da diese aus der durch die Steuerschaltung gesteuerten Stromversorgungsanordnung geliefert wird, muß damit auch diese in Betrieb bleiben. Bei der Anordnung nach der Erfindung wird die Steuerschaltung durch das Schaltsignal ebenfalls abgeschaltet bzw. bei Bedarf wieder eingeschaltet, die Stromversorgungsanordnung liefert damit nur dann elektrische Energie an die Schaltstufe, wenn diese nach Maßgabe des Schaltsignals eine Schaltfunktion durchführen soll bzw. wenn die Stromversorgungsanordnung wenigstens einen der angeschalten Verbraucher mit elektrischer Energie speist. Außerhalb dieser Zeiträume sind die Steuerschaltung und die Schaltstufe nicht in Betrieb. Dadurch wird elektrische Energie gespart sowie eine Erwärmung und ein Einstreuen von Spannungen vermieden. Die Steuerschaltung kann somit in ihren ausgeschalteten Zustand überführt werden, ohne daß dadurch das Ansprechen der Schaltstufe auf das Schaltsignal beeinträchtigt wird.

In einer Stromversorgungsanordnung mit einer Anlaufschaltung, durch die der Steuerschaltung eine für den Übergang vom ausgeschalteten zum eingeschalteten Zustand benötigte Energie aus der Quelle zuführbar ist, wird die Anlaufschaltung für die Energiezufuhr zur Steuerschaltung durch das Schaltsignal in Funktion gesetzt. Die Anlaufschaltung, im folgenden als Teil der Steuerschaltung verstanden, kommt bevorzugt zum Einsatz, wenn die Steuerschaltung selbst mit von der Stromversorgungsanordnung aus der Quelle entnommener Energie gespeist wird, da dann für den Übergang zum eingeschalteten Zustand noch keine von der Stromversorgungsanordnung selbst gelieferte Energie zur Verfügung steht.

Die Schaltsignal-Übertragungseinrichtung zum Übertragen des Schaltsignals an die Schaltstufe und die Steuerschaltung wird mit der für ihren Betrieb benötigten elektrischen Energie aus der Anlaufschaltung gespeist. Die Anlaufschaltung liefert damit der Schaltsignal-Übertragungseinrichtung kontinuierlich Energie, während die außer der Anlaufschaltung selbst von der Steuerschaltung umfaßten Schaltungsteile nur nach Maßgabe des Schaltsignals Energie zugeführt erhalten. Der Energieverbrauch von Stromversorgungsanordnung und Verbrauchern zusammengenommen wird damit auf den äußerst geringen Stromverbrauch der Schaltsignal-Übertragungseinrichtung reduziert, wenn alle Verbraucher außer Betrieb sind. Trotzdem können die Verbraucher jederzeit durch das Schaltsignal wieder in Betrieb genommen werden. Als Schaltsignal-Übertragungseinrichtung kommt insbesondere ein Fernbedienungsempfänger zur Verwendung, über den die Verbraucher zentral steuerbar sind.

Die erfindungsgemäße Stromversorgungsanordnung weist einen Aufbau nach Art eines Schaltnetzteils auf mit einem von der Steuerschaltung gesteuerten Schaltelement und einem von diesem mit elektrischer Energie beaufschlagten induktiven Element, von dem im eingeschalteten Zustand der Steuerschaltung für diese sowie für die Schaltsignal-Übertragungseinrichtung, sowie für die Schaltstufe und den bzw. die Verbraucher die Energie abgeleitet wird, wobei die Energie für die Steuerschaltung und die Schaltsignal-Übertragungseinrichtung einem Energiespeicher entnommen wird, der sowohl von der Anlaufschaltung als auch vom induktiven Element gespeist wird. Das induktive Element ist bevorzugt als Transformator zur galvanischen Trennung zwischen der Quelle und den Verbrauchern, beispielsweise zur Netztrennung, ausgebildet. Der Energiespeicher umfaßt vorzugsweise eine Kapazität, kann aber auch eine Induktivität enthalten und ist so ausgelegt, daß die in ihm enthaltene Energie für den Übergang der Steuerschaltung in den eingeschalteten Zustand ausreicht.

Bei der erfindungsgemäßen Anordnung kann die ohnehin vorhandene Anlaufschaltung sehr einfach durch das Schaltsignal angesteuert werden, darüber hinaus werden die internenFunktionsabläufe der Steuerschaltung durch die Erfindung gegenüber dem Stand der Technik nicht verändert. Die Erfindung kann damit vorteilhaft in bereits bestehende Stromversorgungsanordnungen eingefügt werden, ohne daß dies darin wesentliche Änderungen notwendig macht. Insbesondere können vorgefertigte Schaltungsbausteine, wie monolithisch integrierte Schaltungen, unverändert auch mit der Erfindung eingesetzt werden.

Vorzugsweise wird der Energiespeicher durch das Schaltsignal für die Steuerschaltung wirksam geschaltet, wenn die letztere in den eingeschalteten Zustand überführt werden soll, wogegen die Schaltsignal-Übertragungseinrichtung dauernd mit dem Energiespeicher in Wirkverbindung steht. Im eingeschalteten Zustand der Steuerschaltung kann die Energie für die Schaltsignal-Übertragungseinrichtung dann ebenfalls über das induktive Element zugeführt werden. Zwar könnte der Energiespeicher von der Steuerschaltung nach ihren Übergang in den eingeschalteten Zustand völlig abgetrennt werden, wenn Energie über das induktive Element geliefert wird, eine dauernde Verbindung zwischen dem Energiespeicher und der Steuerschaltung im eingeschalteten Zustand ist jedoch einfacher aufzubauen, außerdem kann der Energiespeicher als Glättungseinrichtung für die Spannung ausgenutzt werden, mit der die Energie vom induktiven Element geliefert wird.

Darüber hinaus ist es in einer Stromversorgungsanordnung, in der die Steuerschaltung den ausgeschalteten Zustand annimmt, wenn die ihr an einem Speisespannungsanschluß zugeführte Spannung einen ersten Schwellenwert wenigstens einmal unterschreitet und einen zweiten, höheren Schwellenwert nicht überschreitet, und den eingeschalteten Zustand annimmt, wenn die Spannung am Speisespannungsanschluß den zweiten Schwellenwert wenigstens einmal überschreitet und den ersten Schwellenwert nicht unterschreitet, und in der der Energiespeicher kapazitiv ausgebildet und mit dem Speisespannungsanschluß verbunden ist, vorteilhaft, daß der Energiespeicher durch eine vom Schaltsignal betätigbare Spannungsbegrenzerschaltung überbrückt ist, die die Spannung am Energiespeicher für den ausgeschalteten Zustand der Steuerschaltung auf einen Wert nahe unterhalb des zweiten Schwellenwertes begrenzt.

Für den Fall, daß die Spannungsbegrenzerschaltung funktionslos ist, führt die Anlaufschaltung dem kapazitiven Energiespeicher Energie aus der Quelle zu, die zu einer Erhöhung der Spannung am Energiespeicher und damit am Speisespannungsanschluß führt, bis der zweite Schwellenwert überschritten wird und dadurch die Steuerschaltung in den eingeschalteten Zustand übergeht. Auf diesem Wege wird die Stromversorgungsanordnung in Betrieb genommen, wenn durch das Schaltsignal die Spannungsbegrenzerschaltung unwirksam geschaltet wird. Der erste und der zweite Schwellenwert bilden dabei eine Schalthysterese, um Störungen durch Spannungsschwankungen am Energiespeicher auszuschließen.

Grundsätzlich kann der erste Schwellenwert mit dem zweiten wenigstens nahezu übereinstimmen und damit die Schalthysterese weitgehend oder ganz entfallen, so daß die Spannung am Energiespeicher durch die Spannungsbegrenzerschaltung stets so weit begrenzt wird, daß die Steuerschaltung in den ausgeschalteten Zustand übergeht. Das Schaltsignal oder die Schaltsignal-Übertragungseinrichtung müssen dann so ausgebildet sein, daß zwischen den beiden möglichen Zuständen der Steuerschaltung unterschieden werden kann. Die zuvor genannte Ausgestaltung der Erfindung eignet sich dagegen auch für bereits bestehende Anordnungen, in denen eine solche zusätzliche Information im Schaltsignal nicht enthalten ist. Diese Anordnungen und damit das Format des Schaltsignals können für den Einsatz der Erfindung dann unverändert bleiben, und die Schaltsignal-Übertragungseinrichtung kann einfach und damit energiesparend aufgebaut werden.

Wenn in einer Fortbildung der erfindungsgemäßen Stromversorgungsanordnung von wenigstens einem der angeschalteten Verbraucher ein Rückmeldesignal geliefert wird, durch das die Spannungsbegrenzerschaltung unwirksam geschaltet wird, ist eine einwandfreie Funktion der Steuerschaltung nach Übergang in den eingeschalteten Zustand auch dann gegeben, wenn ein Schaltsignal nicht mehr vorliegt. Dies ist insbesondere bei einer Übertragung des Schaltsignals über eine Fernbedienung der Fall, um im Fernbedienungssender Energie zu sparen. Das Schaltsignal wird dort nur zur Veränderung des Betriebszustandes der gesamten Anordnung übertragen.

Vorteilhaft umfaßt die Schaltsignal-Übertragungseinrichtung außer einer Empfangsstufe zum Empfangen des Schaltsignals über eine Übertragungsstrecke und zum Weiterleiten an die Schaltstufe auch eine Signalformstufe, über die das Schaltsignal der Spannungsbegrenzerschaltung zugeführt wird. Die Signalformstufe bildet aus dem der Schaltstufe angepaßten Format des Schaltsignals ein zur Ansteuerung der Anlaufschaltung angepaßtes Format. Insbesondere zur Netztrennung ist vorteilhaft die Empfangsstufe über eine den Signalweg des Schaltsignals galvanisch trennende Koppelstufe mit der Schaltstufe verbunden. Als Koppelstufe werden bevorzugt Optokoppler, aber auch Hochfrequenzübertrager oder kapazitive Koppelelemente verwendet.

Das Rückmeldesignal kann zusätzlich in einer Überwachungsstufe ausgewertet werden, die bei seinem Ausbleiben ein Unterbrechungssignal erzeugt zum Überführen der Steuerschaltung in den ausgeschalteten Zustand unabhängig von der Spannung an ihrem Speisespannungseingang. Die Überwachungsstufe ermöglicht damit ein nur durch das Abschalten des Verbrauchers, der das Rückmeldesignal liefert, unabhängig von sonstigen Betriebsbedingungen ausgelöstes Überführen der Steuerschaltung in den ausgeschalteten Zustand.

Die Figuren zeigen im nachfolgenden näher erläuterte Ausführungsbeispiele.

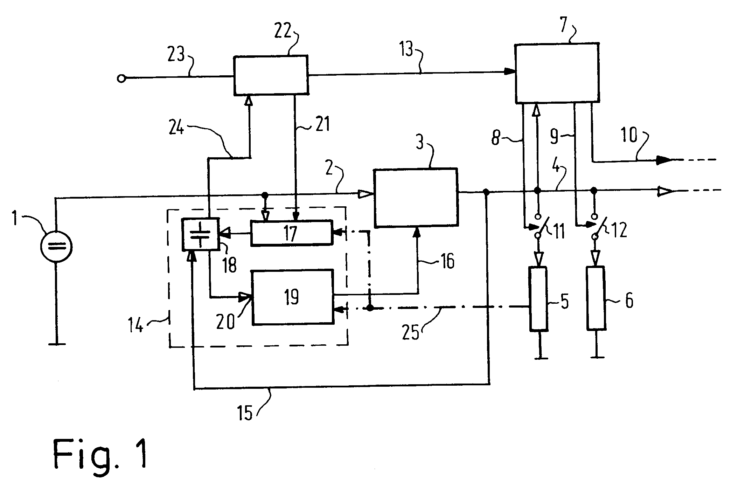

Im Blockschaltbild nach Fig. 1 speist eine Quelle 1 über eine Leitung 2, ein Energieübertragungselement 3 und eine Verteilung 4 eine Anzahl von Verbrauchern, von denen der Einfachheit halber nur zwei dargestellt und mit den Bezugszeichen 5 und 6 versehen sind. Die hellen Pfeilspitzen deuten dabei den Energiefluß an. Über die Verteilung 4 wird ferner eine Schaltstufe 7 mit elektrischer Energie gespeist, die mit über Schaltleitungen 8, 9 bzw. 10 betätigten Schaltern 11, 12 wahlweise die Verbraucher 5, 6 oder auch weitere Verbraucher an die Verteilung 4 und damit an die Energiezufuhr aus der Quelle 1 anschaltet. Dieses Anschalten erfolgt nach Maßgabe eines der Schaltstufe 7 auf einer Schaltsignalleitung 13 zugeführten Schaltsignals. Die dunklen Pfeilspitzen deuten dabei eine steuernde Wirkverbindung an.

Die Energiezufuhr zu den Verbrauchern 5, 6 und zur Schaltstufe 7 wird von einer Steuerschaltung 14 mit Hilfe des Energieübertragungselements 3 derart gesteuert, daß in einem ausgeschalteten Zustand der Steuerschaltung 14 die Energiezufuhr unterbrochen ist und in einem eingeschalteten Zustand der Steuerschaltung 14 über das Energieübertragungselement 3 geregelt wird. Dazu wird der Steuerschaltung 14 über einen Speisespannungsanschluß 15 die Spannung von der Verteilung 4 zur Energieversorgung und gleichzeitig zur Übertragung des Istwertes zugeführt, angedeutet durch einen halb geschwärzten Pfeil. Über einen Stellausgang 16 wird dann von der Steuerschaltung 14 das Energieübertragungselement 3 zum Einstellen einer konstanten Spannung auf der Verteilung 4 gesteuert.

Das Energieübertragungselement 3 kann nach Art eines Schaltnetzteils mit einem induktiven Element und einem über den Stellausgang 16 betätigten Schaltelement ausgebildet sein, das das induktive Element periodisch mit der Quelle 1 verbindet. Statt dessen kann auch jede andere Anordnung eingesetzt werden, die zum Stellen eines Energieflusses verwendbar ist, beispielsweise ein Regeltransistor oder ein entsprechendes anderes Element.

Da die Steuerschaltung 14 über den Speisespannungsanschluß 15 nur mit Energie versorgt wird, wenn sie sich bereits im eingeschalteten Zustand befindet, und ein Übergang in diesen Zustand ohne Energiezufuhr nicht möglich ist, enthält die Steuerschaltung 14 eine Anlaufschaltung 17, der unmittelbar von der Quelle 1 Energie zugeleitet und von der sie an einen Energiespeicher 18 weitergeleitet und dort gespeichert wird. Die auf diese Weise in den Energiespeicher 18 eingespeiste Energie steht der Steuerschaltung 14 somit unabhängig von ihrem Betriebszustand für den Übergang vom ausgeschalteten zum eingeschalteten Zustand zur Verfügung. Der Energiespeicher 18 enthält als Speicherelement bevorzugt einen Kondensator, der zusätzlich als Glättungselement für die Energiezufuhr dient und über den daher auch die Energiezufuhr von der Verteilung 4 über den Speisespannungsanschluß 15 geführt ist. Vom Energiespeicher 18 werden alle übrigen Teile der Steuerschaltung 14, die zu einer als Logikbaustein 19 bezeichneten Baugruppe zusammengefaßt sind, gespeist. Die Spannung am Eingang 20 des Logikbausteins 19 liefert diesem die zum Betrieb notwendige elektrische Energie sowie den Istwert der Spannung an der Verteilung 4.

Der Anlaufschaltung 17 innerhalb der Steuerschaltung 14 wird nun über eine zusätzliche Schaltsignalleitung 21 von einer Schaltsignal-Übertragungseinrichtung 22 das über eine Übertragungsstrecke 23 empfangene und über die Schaltsignalleitung 13 auch der Schaltstufe 7 zugeführte Schaltsignal zugeleitet. Die Steuerschaltung 14 kann dann in den ausgeschalteten Zustand überführt werden, wenn von der Schaltstufe 7 alle Verbraucher 5, 6 abgeschaltet worden sind, und es kann damit auch die Energiezufuhr über die Verteilung 4 zur Schaltstufe 7 und zur Steuerschaltung 14 unterbrochen werden, wobei trotzdem die Ansteuermöglichkeit durch das Schaltsignal erhalten bleibt. Trifft ein solches im ausgeschalteten Zustand der Steuerschaltung 14 ein, wird dadurch die Anlaufschaltung 17 für die Energiezufuhr zur Steuerschaltung 14 und darin insbesondere zum Logikbaustein 19 in Funktion gesetzt. Die über die Anlaufschaltung 17 im Energiespeicher 18 gespeicherte Energie wird - ausgelöst durch das Schaltsignal - dem Logikbaustein 19 zugeführtund so dessen Inbetriebnahme ausgelöst. Dadurch gelangt die Steuerschaltung 14 in ihren eingeschalteten Zustand, in dem über den Stellausgang 16 das Energieübertragungselement 3 zur Energiezufuhr auf die Verteilung 4 angesteuert wird. Von der Verteilung 4 werden dann in beschriebener Weise die Schaltstufe 7 und die Steuerschaltung 14 mit Energie gespeist, und die Schaltstufe 7 tritt damit für eine weitere Auswertung des Schaltsignals auf der Schaltsignalleitung 13 in Funktion.

Die Schaltsignal-Übertragungseinrichtung 22 erhält die zu ihrem Betrieb notwendige Energie über eine Leitung 24 ebenfalls aus dem Energiespeicher 18 und damit über die Anlaufschaltung 17 unmittelbar aus der Quelle 1, unabhängig vom Betriebszustand der Steuerschaltung 14.

In einer Abwandlung der beschriebenen Funktionsweisen kann der Energiespeicher 18 beim ersten Eintreffen des Schaltsignals während des ausgeschalteten Zustands der Steuerschaltung 14 auch ganz oder teilweise energielos sein. Dadurch wird der Vorgang vom Eintreffen des Schaltsignals bis zum Inbetriebgehen des anzuschaltenden Verbrauchers um die Zeitspanne verlängert, die für das Zuführen der benötigten Energie zum Energiespeicher 18 verbraucht wird. Außerdem kann dann die Schaltsignal-Übertragungseinrichtung 22 unter Umständen nicht mehr unmittelbar aus dem Energiespeicher 18, sondern nur noch unmittelbar aus der Anlaufschaltung 17 gespeist werden.

Der Übergang der Steuerschaltung 14 in ihren ausgeschalteten Zustand kann zum einen mit Hilfe des Schaltsignals über die zusätzliche Schaltsignalleitung 21 und die Anlaufschaltung 17 vorgenommen werden, indem diese die Energiezufuhr vom Energiespeicher 18 an den Logikbaustein 19 über den Eingang 20 unterbricht. Eine andere Möglichkeit besteht darin, daß derjenige der Verbraucher 5, 6, der von der Schaltstufe als letzter abgeschaltet wird, ein Rückmeldesignal über eine Rückmeldesignalleitung 25 an die Steuerschaltung 14 liefert, solange er mit elektrischer Energie gespeist wird. Im vorliegenden Beispiel ist dies der Verbraucher 5. Das Rückmeldesignal wird der Anlaufschaltung 17 oder dem Logikbaustein 19 zugeleitet. Bei seinem Ausbleiben wird der Logikbaustein 19 unmittelbar oder durch Unwirksamschalten des Energiespeichers 18 über die Anlaufschaltung 17 außer Funktion gesetzt.

In einer Abwandlung der beschriebenen Anordnung kann das Rückmeldesignal auch eine Information über den Istwert der Spannung an der Verteilung 4 enthalten, so daß diese vom Logikbaustein 19 über eine Regelschleife nachgeregelt wird, die über die Rückmeldesignalleitung 25 geschlossen wird.

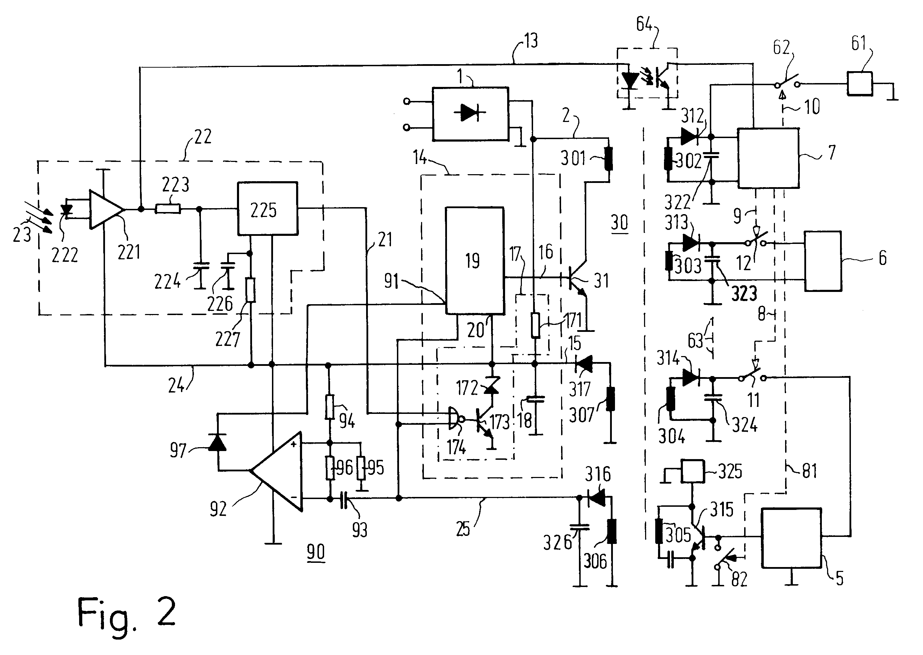

Fig. 2 zeigt als zweites Ausführungsbeispiel in etwas detaillierterer Darstellungsweise eine Stromversorgungsanordnung für ein Fernsehgerät, in der mit Fig. 1 übereinstimmende Teile wieder mit identischen Bezugszeichen versehen sind. Die Quelle 1 wird durch einen Netzgleichrichter gebildet, der die Leitung 2 mit einer geglätteten Gleichspannung von z.B. 300 Volt beaufschlagt. Diese wird der Primärwicklung 301 eines induktiven Elements 30 zugeführt, das zur Netztrennung als Transformator mit gegenüber der Primärwicklung 301 galvanisch isolierten Sekundärwicklungen 302 bis 307 ausgeführt ist. Die Primärwicklung 301 ist mit dem Hauptstrompfad eines Schaltelements 31 in Reihe und zwischen die Leitung 2 und Masse geschaltet. Das induktive Element 30 und das Schaltelement 31 üben die Funktion des Energieübertragungselements 3 und der Verteilung 4 nach Art eines Schaltnetzteils aus. Dazu wird das Schaltelement 31 von der Steuerschaltung 14 über den Stellausgang 16 periodisch in den leitenden und den gesperrten Zustand geschaltet.

Die Sekundärwicklungen 302, 303, 304 sind über Gleichrichter 312, 313 bzw. 314 und Siebkondensatoren 322, 323, 324 mit den Verbrauchern 5, 6 bzw. der Schaltstufe 7 verbunden, wobei die Verbraucher 5, 6 über Schaltleitungen 8, 9 und Schalter 11, 12 durch die Schaltstufe 7 an die Siebkondensatoren 323, 324 anschaltbar sind. Ein weiterer Verbraucher 61 ist parallel zur Schaltstufe 7 an den Siebkondensator 322 angeschlossen und wird über einen weiteren Schalter 62 - gesteuert durch die Schaltleitung 10 - angeschaltet. Darüber hinaus sind zusätzliche, nicht dargestellte, sondern nur durch drei Striche 63 angedeutete Verbraucher an das induktive Element 30 anschaltbar, und zwar entweder an die bestehenden Siebkondensatoren - wie Verbraucher 61 - oder an zusätzliche Sekundärwicklungen.

Die Anlaufschaltung 17 umfaßt einen hochohmigen Widerstand 171, der mit dem von einem Kondensator gebildeten Energiespeicher 18 in Reihe zwischen die Leitung 2 und Masse geschaltet ist. Über den Widerstand 171 wird der Energiespeicher 18 von der Quelle 1 aufgeladen, und der Widerstand 171 ist dazu so dimensioniert, daß der über ihn nachgeführte Strom gerade zum Speisen der Baugruppen der Anordnung ausreicht, die im ausgeschalteten Zustand der Steuerschaltung 14 noch Strom verbrauchen. Ferner ist der Energiespeicher 18 durch eine Spannungsbegrenzerschaltung aus einer Zenerdiode 172 überbrückt, die durch einen dazu in Reihe angeordneten Transistor 173 wirksam oder unwirksam schaltbar ist. Dies erfolgt entweder durch das über die zusätzliche Schaltsignalleitung 21 zugeführte Schaltsignal oder durch das Rückmeldesignal auf der Rückmeldesignalleitung 25, die über ein (aus der Leitung 24 mit Energie versorgtes) NOR-Gatter 174 zu einer Steuerspannung für den Basisanschluß des Transistors 173 verknüpft werden. Im ausgeschalteten Zustand der Steuerschaltung 14 ist der Transistor 173 leitend und die Zenerdiode 172 begrenzt die Spannung am Energiespeicher 18 auf einen fest vorgegebenen Wert.

Die Schaltsignal-Übertragungseinrichtung 22 enthält eine Empfangsstufe mit einem Signalverstärker 221, der das von einer Fotodiode 222 zugeführte Signal verstärkt und von der Anlaufschaltung 17 über die Leitung 24 mit Energie gespeist wird. Der Fotodiode 222 wird ein moduliertes Infrarotlichtsignal als Schaltsignal durch den die Übertragungsstrecke bildenden, vom Licht durchlaufenen freien Raum (oder andere lichtleitende Medien) zugeführt, und der Signalverstärker 221 liefert ein entsprechendes elektrisches Signal an die Schaltsignalleitung 13. Von dieser wird das Schaltsignal über eine galvanisch trennende Koppelstufe 64 - hier einen Optokoppler - der Schaltstufe 7 zur Auswertung zugeführt.

Die Schaltsignal-Übertragungseinrichtung 22 umfaßt weiterhin eine Auswerteschaltung, deren Aufgabe im wesentlichen darin besteht, Störungen im Schaltsignal zu unterdrücken, um deren Einfluß auf die Steuerschaltung 14 über die zusätzliche Schaltsignalleitung 21 zu unterdrücken. Im vorliegenden Beispiel besteht diese Auswerteschaltung aus einem Integrator mit einem Längswiderstand 223 und einer Querkapazität 224 sowie einer sich daran anschließenden Signal- bzw. Impulsformstufe mit einem monostabilen Multivibrator 225 mit die Dauer des an die zusätzliche Schaltsignalleitung 21 gelieferten Impulses bestimmenden Elementen 226 (Kondensator) und 227 (Widerstand). Die Auswerteschaltung kann auch mit einem Zähler oder einer logischen Verknüpfungsschaltung aufgebaut sein. Sie wird ebenfalls aus der Leitung 24 mit Energie gespeist. Bei einem besonders energiesparenden Aufbau kann die Auswerteschaltung entfallen, womit jedoch eine geringfügig vergrößerte Anfälligkeit der Anordnung gegenüber Störungen auf der zusätzlichen Schaltsignalleitung in Kauf zu nehmen sind.

Anstelle der Übertragung des Schaltsignals mit Hilfe von infrarotem Licht können natürlich auch andere Übertragungsmedien verwendet werden, z.B. Ultraschall oder auch eine drahtgebundene Übertragung, die jedoch vorzugsweise von der Schaltsignal-Übertragungseinrichtung 22 galvanisch getrennt ist.

Als Logikbaustein 19 in der Steuerschaltung 14 des vorliegenden Beispiels kommt bevorzugt eine bekannte, monolithisch integrierte Schaltung zum Einsatz, deren Betriebsverhalten in vorteilhafter Weise für die Stromversorgungsanordnung ausgenutzt wird. Insbesondere weist diese Schaltung bezüglich der ihr am Eingang 20 über den Speisespannungsanschluß 15 und damit vom Energiespeicher 18 her zugeführten Spannung eine Hysterese auf derart, daß der Logikbaustein 19 und damit die Steuerschaltung 14 den ausgeschalteten Zustand annimmt, wenn die Spannung am Eingang 20 einen ersten Schwellenwert wenigstens einmal unterschreitet und einen zweiten, höheren Schwellenwert nicht überschreitet, und daß sie den eingeschalteten Zustand annimmt, wenn die Spannung am Eingang 20 den zweiten Schwellenwert wenigstens einmal überschreitet und den ersten Schwellenwert nicht unterschreitet. Dabei ist der Wert, auf den die Spannungsbegrenzerschaltung 172, 173 die Spannung am Energiespeicher 18 begrenzt, im Spannungsbereich zwischen den beiden Schwellenwerten und dort insbesondere nahe unterhalb des zweiten Schwellenwertes angeordnet.

Bei Inbetriebnahme der Quelle 1 befindet sich die Steuerschaltung 14 im ausgeschalteten Zustand, das Schaltelement 31 sperrt und der Energiespeicher 18 wird aus dem energielosen Zustand allmählich aufgeladen, bis die gleichzeitig damit wirksam werdende Spannungsbegrenzerschaltung 172, 173 den Aufladevorgang beendet. Über den Widerstand 171 wird dann lediglich die Schaltsignal-Übertragungseinrichtung 22 gespeist und ist zur Aufnahme eines Schaltsignals bereit, während der Logikbaustein 19 weiterhin im ausgeschalteten Zustand verbleibt, in dem durch ihn nur ein äußerst geringer Strom fließt. Insgesamt ist der Energiebedarf der Anordnung in diesem Zustand äußerst gering.

Beim Eintreffen eines Signals über die Übertragungsstrecke 23, das von dem Integrator 223, 224 als Schaltsignal erkannt wird, erzeugt die Impulsformstufe einen positiven Impuls auf der zusätzlichen Schaltsignalleitung 21, durch den der Transistor 173 über das NOR-Gatter 174 gesperrt wird. Damit ist die Spannungsbegrenzerschaltung 172, 173 unwirksam und der Energiespeicher 18 wird über den Widerstand 171 weiter aufgeladen, bis die Spannung am Eingang 20 den zweiten Schwellenwert überschreitet. Damit geht der Logikbaustein 19 in den eingeschalteten Zustand über, wodurch zunächst seine Stromaufnahme am Eingang 20 stark erhöht wird. Dieser Strom wird aus dem Energiespeicher 18 nachgeliefert. Der Logikbaustein 19 gibt ein Steuersignal ab, mit dem über den Stellausgang 16 das Schaltelement 31 periodisch leitend und gesperrt geschaltet wird. An der Sekundärwicklung 307 des induktiven Elements 30 wird eine Spannung induziert, die über einen Gleichrichter 317 gleichgerichtet und dem Energiespeicher 18 zum Nachliefern elektrischer Energie zugeführt wird. Der Energiespeicher 18 dient damit zusätzlich als Siebkondensator für die Energieversorgung über die Sekundärwicklung 307 und ist so dimensioniert, daß die in ihm gespeicherte Energie ausreicht, den eingeschalteten Zustand bis zum Aufbau der Spannung an der Sekundärwicklung 307 zu erhalten, d.h. die Spannung am Eingang 20 darf bis zu diesem Augenblick nicht unter den ersten Schwellenwert absinken. Wäre dies der Fall, würde der Logikbaustein 19 und damit die Steuerschaltung 14 in den ausgeschalteten Zustand zurückfallen, der Energiespeicher 18 würde durch den Widerstand 171 erneut aufgeladen, bis ein weiteres Umschalten des Logikbausteins 19 beim Überschreiten des zweiten Schwellenwertes eintritt.

Gleichzeitig mit der Spannung an der Sekundärwicklung 307 treten auch an allen anderen Sekundärwicklungen 302 bis 306 Spannungen auf. Insbesondere wird über die Sekundärwicklung 302 die Schaltstufe 7 mit elektrischer Energie gespeist, so daß das über die Schaltsignalleitung 13 und den Optokoppler 64 zugeführte Schaltsignal ausgewertet und danach der bzw. die gewünschte(n) Verbraucher angeschaltet werden können.

Der Logikbaustein 19 ist derart ausgebildet, daß das Steuersignal am Stellausgang 16 Spannungsschwankungen am Eingang 20 nachgeführt wird, so daß am Energiespeicher 18 eine konstante Spannung auftritt.

Für die Stromversorgungsanordnung eines Fernsehgerätes von besonderer Bedeutung ist die Ablenkschaltung, die in Fig. 2 als Verbraucher 5 dargestellt ist. Sie steuert einen Ablenktransistor 315 und über diesen eine Ablenkeinheit 325, die im Prinzip bekannt sind und daher nicht näher erläutert werden. Mit einem über eine Schaltleitung 81 gesteuerten Schalter 82 kann der Ablenktransistor 315 und damit die Ablenkeinheit 325 abgeschaltet werden.

Wenn die Ablenkeinheit 325 angeschaltet ist, werden durch sie über die Sekundärwicklung 305 in der Sekundärwicklung 306 Zeilenrückschlagimpulse induziert und daraus über einen Gleichrichter 316 in einem Siebkondensator 326 eine von der Amplitude der Zeilenrückschlagimpulse abhängige Spannung auf der Rückmeldesignalleitung 25 erzeugt, die als Rückmeldesignal der Steuerschaltung 14 zugeführt wird. Das Rückmeldesignal hält damit einerseits über das NOR-Gatter 174 den Transistor 173 im gesperrten Zustand, die Spannungsbegrenzerschaltung bleibt damit auch nach Abklingen des Impulses auf der zusätzlichen Schaltsignalleitung 21 unwirksam. Außerdem gelangt das Rückmeldesignal unmittelbar zum Logikbaustein 19 und dient dort zur Nachführung des Steuersignals am Stellausgang 16, so daß die Stromversorgungsanordnung durch die Ablenkschaltung geregelt wird.

Durch weitere Schaltsignale können nun über die Schaltstufe 7 bis auf die Ablenkschaltung (Verbraucher 5) Verbraucher beliebig an- oder abgeschaltet oder Abstimm- und Einstellvorgänge im Fernsehgerät vorgenommen werden. Dies hat auf den Betrieb der Stromversorgungsanordnung keinen Einfluß.

Wird jedoch ein Schaltsignal zugeführt, durch das die Schaltstufe die Ablenkschaltung abschaltet, werden in der Sekundärwicklung 306 keine Impulse mehr induziert, worauf die Spannung auf der Rückmeldesignalleitung 25 zusammenbricht. Dadurch wird einerseits die Spannungsbegrenzerschaltung 172, 173 wirksam, andererseits wird das als negative Spannungsflanke auf der Rückmeldesignalleitung 25 auftretende Zusammenbrechen der Spannung in einer als Differenzierer ausgebildeten Überwachungsstufe 90 zu einem Impuls geformt und dieser als Unterbrechungssignal einem Unterbrechungssignaleingang 91 des Logikbausteins 19 zugeleitet. Durch diesen Impuls wird der Logikbaustein 19 und damit die Steuerschaltung 14 unabhängig von der Spannung am Eingang 20 in den ausgeschalteten Zustand überführt, das Schaltelement 31 wird gesperrt und die Speisung der Verbraucher beendet. Als Folge des Stromverbrauchs durch den Logikbaustein 19 und die Schaltsignal-Übertragungseinrichtung 22 (sowie die Überwachungsstufe 90) bricht auch die Spannung am Energiespeicher 18 zusammen, da über den Widerstand 171 nicht genügend Strom nachgeführt werden kann. Wenn die Spannung den ersten Schwellenwert unterschreitet, geht der Logikbaustein 19 in den ausgeschalteten Zustand über. Aufgrund der damit stark verringerten Stromaufnahme des Logikbausteins 19 steigt nun die Spannung am Energiespeicher 18 wieder an, bis sie durch die Spannungsbegrenzerschaltung 172, 173 begrenzt wird. Damit ist die Stromversorgungsanordnung wieder zum Einschalten durch ein weiteres Schaltsignal bereit.

Die Überwachungsstufe 90 ist mit einem Differenzverstärker 92 aufgebaut, der im vorliegenden Fall aus dem Energiespeicher 18 mit Energie gespeist wird. Seinem invertierenden Eingang wird über einen Kondensator 93 die Spannung auf der Rückmeldesignalleitung 25 zugeführt, während der nicht invertierende Eingang über einen Spannungsteiler 94, 95 an einer Referenzspannung liegt, hier am Energiespeicher 18. Ein Ausgleichswiderstand 96 verbindet die Eingänge des Differenzverstärkers; sein Ausgang führt über eine Diode 97 an den Unterbrechungssignaleingang 91.

Die Überwachungsstufe 90 gewährleistet einen sicheren Übergang in den ausgeschalteten Zustand ohne Auftreten zwischenzeitlicher Regelfehler durch den Logikbaustein 19. Beim Zusammenbrechen der Spannung auf der Rückmeldesignalleitung 25 würde der Logikbaustein 19 ohne den Impuls am Unterbrechungssignaleingang 91 zunächst zu einem Aufregeln und damit einer Erhöhung der Energieübertragung veranlaßt werden, bevor die Spannung auf der Rückmeldesignalleitung 25 aufgrund des überwiegenden Effektes des Ausbleibens der Rückschlagimpulse so stark vermindert ist, daß der Logikbaustein 19 endlich doch das Steuersignal am Stellausgang 16 unterbricht.

Wird anstelle eines Schaltsignals nur eine Störung auf der zusätzlichen Schaltsignalleitung 21 übertragen, erfolgt zwar ebenfalls ein Übergang der Steuerschaltung 14 vom ausgeschalteten in den eingeschalteten Zustand. Da die Schaltstufe 7 jedoch kein Schaltsignal erkennt, durch das sie die Ablenkschaltung anschalten würde, wird auch kein Rückmeldesignal gebildet, und nach Abklingen der Störung wird die Spannungsbegrenzerschaltung 172, 173 wieder wirksam. Aufgrund der fehlenden Spannung auf der Rückmeldesignalleitung 25 geht der Logikbaustein 19 in den ausgeschalteten Zustand über und verbleibt dort wegen der inzwischen wieder begrenzten Spannung am Energiespeicher 18.

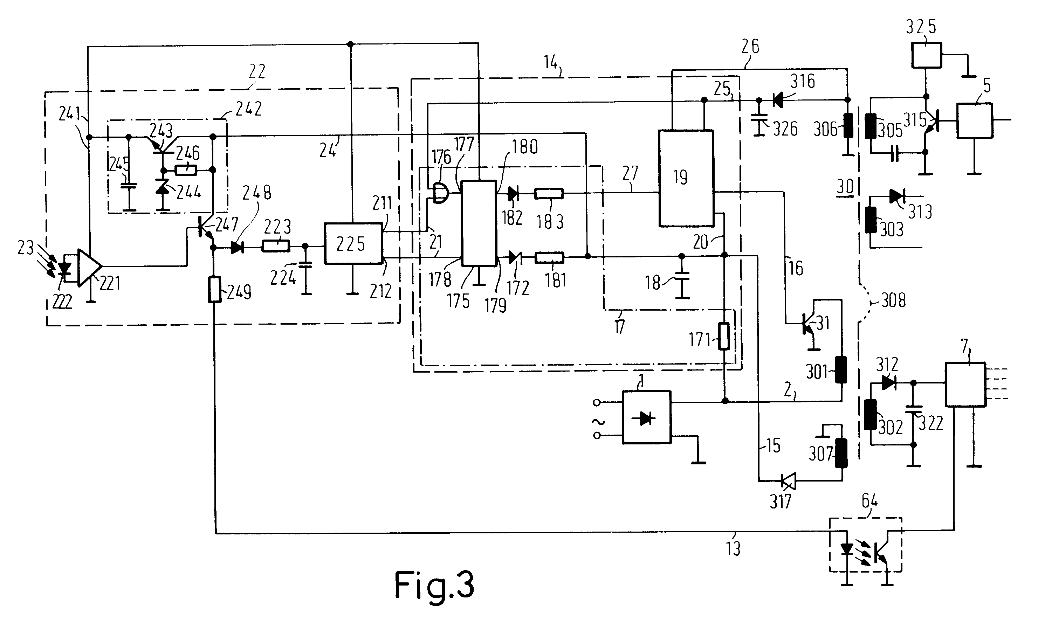

Fig. 3 zeigt eine Abwandlung der Schaltungsanordnung nach Fig. 2, in der bereits beschriebene Elemente wieder mit denselben Bezugszeichen versehen sind.

Das induktive Element 30 ist bei der Anordnung nach Fig. 3 wieder als Transformator mit den galvanisch gegeneinander isolierten Wicklungen 301 bis 307 ausgeführt, wobei die Wicklung 304 zur Vereinfachung der Darstellung weggelassen wurde. Die Primärwicklung 301 ist mit den Sekundärwicklungen 302 und 307 magnetisch eng gekoppelt, jedoch über einen Luftspalt 308 nur schwach an die Sekundärwicklungen 303, 305 und 306, die untereinander wiederum eng gekoppelt sind.

Als Logikbaustein 19 wird wieder bevorzugt eine monolithisch integrierte Schaltung verwendet, beispielsweise des Typs TDA 3640. Ihre Funktion entspricht weitgehend der zu Fig. 2 beschriebenen. Zusätzlich ist beim Logikbaustein 19 nach Fig. 3 eine zweite Rückmeldesignalleitung 26 für ein zweites Rückmeldesignal von der Sekundärwicklung 306 vorgesehen. Während über die Rückmeldesignalleitung 25 ein zeitlich gemitteltes Rückmeldesignal übertragen wird, ist das zweite Rückmeldesignal auf der zweiten Rückmeldesignalleitung 26 impulsförmig. Es wird bevorzugt aus den Zeilenrückschlagimpulen des Fernsehgerätes aus der Sekundärwicklung 305 abgeleitet. Solange das zweite Rückmeldesignal über die zweite Rückmeldesignalleitung 26 an den Logikbaustein 19 geliefert wird, schaltet dieser das Schaltelement 31 derart, daß die Zeilenrückschlagimpulse auf eine konstante Amplitude geregelt werden.

In Fig. 3 ist weiterhin die Anlaufschaltung 17 gegenüber der Ausführung nach Fig. 2 abgewandelt. Der monostabile Multivibrator 225 weist jetzt zwei Ausgänge auf, einen nicht invertierten 211 und einen invertierten 212, die über die jetzt zweiadrig ausgeführte zusätzliche Schaltsignalleitung 21 an eine bistabile Kippschaltung 175 angeschlossen sind. Der nicht invertierte Ausgang 211 ist dabei über ein Oder-Gatter 176 mit einem Rücksetzeingang 177, der invertierte Ausgang 212 mit einem Setzeingang 178 der bistabilen Kippschaltung 175 verbunden. Ein nicht invertierter Ausgang 179 der bistabilen Kippschaltung 175 ist über die Zenerdiode 172 und einen zusätzlich eingeführten Widerstand 181 mit dem Energiespeicher 18 verbunden, wohingegen ein invertierter Ausgang 180 der bistabilen Kippschaltung 175 über eine Diode 182 und einen weiteren Widerstand 183 mit einem zusätzlichen Steuereingang 27 des Logikbausteins 19 verbunden ist.

Bei der Anordnung nach Fig. 3 wird ferner die Spannung vom Energiespeicher 18 über die Leitung 24 nicht unmittelbar, sondern über eine Spannungsstabilisierungsschaltung 242 zur Energieversorgung des Signalverstärkers 221, des monostabilen Multivibrators 225, der bistabilen Kippschaltung 175 sowie - nicht dargestellt - des Oder-Gatters 176 geleitet. Die stabilisierte Versorgungsspannung wird dabei von einem mit 241 bezeichneten Abschnitt der Leitung geführt. Die Spannungsstabilisierungsschaltung 242 umfaßt einen Längstransistor 243, über dessen Kollektor-Emitter-Strecke der Strom zur Energieversorgung von der Leitung 24 zum Abschnitt 241 fließt. Der Längstransistor 243 ist mit seinem Basisanschluß über eine Zenerdiode 244 an Masse angeschlossen. Die Zenerdiode 244 bestimmt die stabilisierte Versorgungsspannung, auf die sich ein zwischen dem Emitteranschluß des Längstransistors 243 und Masse geschalteter Glättungskondensator 245 auflädt. Außerdem sind Kollektor- und Basisanschluß des Längstransistors 243 durch einen Parallelwiderstand 246 überbrückt.

Der Signalverstärker 221 steuert den Integrator 223, 224 im vorliegenden Beispiel über einen mit seinem Kollektoranschluß an die nicht stabilisierte Versorgungsspannung auf der Leitung 24 angeschlossenen Ausgangstransistors 247 an, dessen Emitteranschluß über eine Diode 248 mit dem Längswiderstand 223 verbunden ist. Durch diese Anordnung wird erreicht, daß der vom Integrator 223, 224 aufgenommene Strom die Versorgungsspannung auf dem Abschnitt 241 und damit die Funktionsweise der über diesen Abschnitt 241 gespeisten Baugruppen nicht beeinflußt. Vom Emitteranschluß des Ausgangstransistors 247 wird außerdem über einen weiteren Widerstand 249 die Schaltsignalleitung 13 gespeist.

Bei Inbetriebnahme der Quelle 1 befindet sich die bistabile Kippschaltung 175 im ausgeschalteten Zustand, die Zenerdiode 172 ist über den nicht invertierten Ausgang 179 mit Masse verbunden und begrenzt damit den Aufladevorgang des Energiespeichers 18, wie bereits zu Fig. 2 beschrieben. Über die Leitung 24 und deren Abschnitt 241 werden die bistabile Kippschaltung 175, das Oder-Gatter 176, der Signalverstärker 221 und der monostabile Multivibrator 225 mit Energie versorgt und im betriebsbereiten Zustand gehalten. Ohne ein Signal auf der Übertragungsstrecke 23 führt der monostabile Multivibrator 225 an seinem nicht invertierten Ausgang 211 eine hohe und an seinem invertierten Ausgang 212 eine niedrige Spannung.

Beim Eintreffen eines Signals über die Übertragungsstrecke 23 erzeugt der monostabile Multivibrator 225 auf der zusätzlichen Schaltsignalleitung 21 einen Impuls, und zwar einen positiven Spannungsimpuls an seinem nicht invertierten Ausgang 211 und einen negativen Spannungsimpuls an seinem invertierten Ausgang 212. Der negative Spannungssprung am Setzeingang 178 schaltet die bistabile Kippschaltung 175 derart um, daß ihr nicht invertierter Ausgang 179 von Masse abgetrennt und damit die Spannungsbegrenzung am Energiespeicher 18 durch die Zenerdiode 172 wirkungslos wird. Damit geht der Logikbaustein 19 in den eingeschalteten Zustand über, wie dies zu der Anordnung nach Fig. 2 beschrieben ist. Wenn dabei über die Rückmeldesignalleitung 25 eine Spannung an das Oder-Gatter 176 über seinen zweiten Eingang geliefert wird, verhindert diese ein Rücksetzen der bistabilen Kippschaltung 175, auch wenn der vom monostabilen Multivibrator 225 gelieferte Impuls am nicht invertierten Ausgang 211 beendet ist.

Die Dauer der vom monostabilen Multivibrator 225 abgegebenen Impulse ist so groß gewählt, daß sie den Zeitraum zwischen zwei aufeinanderfolgenden Signalen auf der Übertragungsstrecke 23, die als Schaltsignale erkannt werden, überbrückt. Nach dem ersten Signal wird somit die Energieversorgung der Schaltstufe 7 eingeleitet, die dann noch in Funktion ist, wenn das zweite Signal eintrifft und über die Koppelstufe 64 der Schaltstufe 7 zugeführt wird. Wird dagegen das Signal von der Übertragungsstrecke 23 nicht als Befehl zum Einschalten der Verbraucher erkannt, bleibt auch das Rückmeldesignal auf der Rückmeldesignalleitung 25 aus, und beim Ende des Impulses auf der zusätzlichen Schaltsignalleitung 21 wird die bistabile Kippschaltung 175 zurückgesetzt. Damit wird zum einen die Spannungsbegrenzung über die Zenerdiode 172 wieder wirksam, zum anderen wird ein positiver Spannungssprung vom invertierten Ausgang 180 der bistabilen Kippschaltung 175 an den zusätzlichen Steuereingang 27 des Logikbausteins 19 geleitet, durch den die Ansteuerung des Schaltelements 31 über den Stellausgang 16 unterbrochen wird. Damit wird auch die weitere Energiezufuhr über den Speisespannungsanschluß 15 an den Logikbaustein 19 unterbrochen, wie zu Fig. 2 beschrieben.

## Patentansprüche

1. Stromversorgungsanordnung zum Speisen wenigstens eines Verbrauchers (5, 6) mit elektrischer Energie aus einer Quelle (1),
mit einer Schaltstufe (7) zum wahlweisen Anschalten des bzw. der Verbraucher(s) (5, 6) nach Maßgabe eines ihr zugeführten Schaltsignals (auf 13),
mit einer Steuerschaltung (14), die in ihrem ausgeschalteten Zustand die Energiezufuhr zur Schaltstufe (7) und zu dem bzw. den Verbraucher(n) (5, 6) unterbricht, die in ihrem eingeschalteten Zustand die Energiezufuhr wenigstens zur Schaltstufe (7) regelt und der auch das Schaltsignal zugeführt wird (auf 21) zum Umschalten zwischen dem ausgeschalteten und dem eingeschalteten Zustand,
mit einer Anlaufschaltung (17), durch die der Steuerschaltung (14) eine für den Übergang vom ausgeschalteten zum eingeschalteten Zustand benötigte Energie aus der Quelle (1) zuführbar ist und die für die Energiezufuhr zur Steuerschaltung (14) durch das Schaltsignal (auf 21) in Funktion gesetzt wird,
mit einer mit der für ihren Betrieb benötigten elektrischen Energie aus der Anlaufschaltung (17) gespeisten Schaltsignal-Übertragungseinrichtung (22) zum Übertragen des Schaltsignals (auf 13 bzw. 21) an die Schaltstufe (7) und die Steuerschaltung (14),
gekennzeichnet durch einen Aufbau nach Art eines Schaltnetzteils mit einem von der Steuerschaltung gesteuerten Schaltelement (31) und einem von diesem mit elektrischer Energie beaufschlagten induktiven Element (30), von dem im eingeschalteten Zustand der Steuerschaltung (14) für diese sowie für die Schaltsignal-Übertragungseinrichtung, sowie für die Schaltstufe (7) und den bzw. die Verbraucher (5, 6) die Energie abgeleitet wird, wobei die Energie für die Steuerschaltung (14) und die Schaltsignal-Übertragungseinrichtung (22) einem Energiespeicher (18) entnommen wird, der sowohl von der Anlaufschaltung (17) als auch vom induktiven Element (30) gespeist wird.

2. Stromversorgungsanordnung nach Anspruch 1,
dadurch gekennzeichnet, daß der Energiespeicher (18) durch das Schaltsignal (auf 21) für die Steuerschaltung (14) wirksam geschaltet wird.

3. Stromversorgungsanordnung nach Anspruch 2, in der die Steuerschaltung (14) den ausgeschalteten Zustand annimmt, wenn die ihr an einem Speisespannungsanschluß (15) zugeführte Spannung einen ersten Schwellenwert wenigstens einmal unterschreitet und einen zweiten, höheren Schwellenwert nicht überschreitet, und den eingeschalteten Zustand annimmt, wenn die Spannung am Speisespannungsanschluß (15) den zweiten Schwellenwert wenigstens einmal überschreitet und den ersten Schwellenwert nicht unterschreitet, und in der der Energiespeicher (18) kapazitiv ausgebildet und mit dem Speisespannungsanschluß (15) verbunden ist,
dadurch gekennzeichnet, daß der Energiespeicher (18) durch eine vom Schaltsignal (auf 21) betätigbare Spannungsbegrenzerschaltung (172, 173) überbrückt ist, die die Spannung am Energiespeicher (18) für den ausgeschalteten Zustand der Steuerschaltung (14) auf einen Wert nahe unterhalb des zweiten Schwellenwertes begrenzt.

4. Stromversorgungsanordnung nach Anspruch 3,
gekennzeichnet durch ein von wenigstens einem der angeschalteten Verbraucher (5, 6) geliefertes Rückmeldesignal (auf 25), durch das die Spannungsbegrenzerschaltung (172, 173) unwirksam geschaltet wird.

5. Stromversorgungsanordnung nach Anspruch 1, 2, 3 oder 4, in der die Schaltsignal-Übertragungseinrichtung eine Empfangsstufe (221, 222) umfaßt zum Empfangen des Schaltsignals über eine Übertragungsstrecke (23) und zum Weiterleiten an die Schaltstufe (7),
gekennzeichnet durch eine Signalformstufe (225, 226, 227), über die das Schaltsignal der Spannungsbegrenzerschaltung (172, 173) zugeführt wird.

6. Stromversorgungsanordnung nach Anspruch 5,
dadurch gekennzeichnet, daß die Empfangsstufe (221, 222) über eine den Signalweg des Schaltsignals galvanisch trennende Koppelstufe (64) mit der Schaltstufe (7) verbunden ist.

7. Stromversorgungsanordnung nach Anspruch 4, 5 oder 6,
gekennzeichnet durch eine Überwachungsstufe (90), die beim Ausbleiben des Rückmeldesignals (auf 25) ein Unterbrechungssignal (auf 91) erzeugt zum Überführen der Steuerschaltung (14) in den ausgeschalteten Zustand unabhängig von der Spannung an ihrem Speisespannungsanschluß (15).

## Claims

1. A power supply arrangement for supplying at least one load (5, 6) with electric energy from a source (1) comprising:
- a switching stage (7) for optionally switching on the load(s) (5, 6) in accordance with a switching signal applied thereto (at 13);
- a control circuit (14) which in its switched-off state cuts the supply of energy to the switching stage (7) and to the load(s) (5, 6), which in its switched-on state controls the energy supply to at least the switching stage (7) and to which also the switching signal is applied (at 21) for switching between the on and off states;
- a start circuit (17) by which the energy required for changing from the switched-off state to the switched-on state can be applied from the source (1) to the control circuit (14), and which is made operative for the supply of energy to the control circuit (14) by the switching signal (at 21);
- a switching signal transmission device (22) for transmitting the switching signal (at 13 and 21) to the switching stage (7) and the control circuit (14), which switching signal transmission device is supplied with the electric energy required for its operation from the start circuit (17),
characterized in that it has a structure as a switched-mode power supply having a switching element (31) controlled by the control circuit and an inductive element (30) charged with electric energy by the switching element, from which in the switched-on state of the control circuit (14) the energy is derived for this control circuit and also for the switching signal-transmission device as well as for the switching stage (7) and the load(s) (5, 6), the energy for the control circuit (14) and the switching-signal transmission device (22) being taken from an energy store (18) which is supplied from both the start circuit (17) and the inductive element (30).

2. A power supply arrangement as claimed in Claim 1, characterized in that the energy store (18) is switched to the active state by the switching signal (at 21) for the control circuit (14).

3. A power supply arrangement as claimed in Claim 2, in which the control circuit (14) assumes the switched-off state when the voltage applied to its power supply terminal (15) falls below a first threshold value at least once and does not exceed a second, higher threshold value, and assumes the switched-on state when the voltage at the power supply terminal (15) exceeds the second threshold value at least once and does not fall below the first threshold value, and in which the energy store (18) is formed capacitively and is connected to the power supply terminal (15),
characterized in that the energy store (18) is shunted by a voltage limiter circuit (172, 173) which can be operated by the switching signal (at 21) and limits the voltage at the energy store (18) for the switched-off state of the control circuit (14) to a value near and below the second threshold value.

4. A power supply arrangement as claimed in Claim 3, characterized in that at least one of the connected loads (5, 6) provides an acknowledge signal (at 25) by which the voltage limiter circuit (172, 173) is switched to the inoperative state.

5. A power supply arrangement as claimed in Claim 1, 2, 3 or 4, in which the switching signal transmission device includes a receiving stage (221, 222) for receiving the switching signal via a transmission path (23) and for conveying it to the switching stage (7),
characterized by a signal shaping stage (225, 226, 227) via which the switching signal is applied to the voltage limiter circuit (172, 173).

6. A power supply arrangement as claimed in Claim 5, characterized in that the receiver stage (221, 222) is connected to the switching stage (7) via a coupling stage (64) for d.c. isolating the signal path of the switching signal.

7. A power supply arrangement as claimed in Claim 4, 5 or 6,
characterized by a supervising stage (90), which, when the acknowledge signal does not arrive (at 25), produces an interrupt signal (at 91) for adjusting the control circuit (14) to the switched-off state, independently of the voltage at its power supply terminal (15).

## Revendications

1. Dispositif d'alimentation en courant pour alimenter au moins une charge (5, 6) au moyen d'énergie électrique provenant d'une source (1), comportant :
un étage de commutation (7) pour mettre sous tension facultativement la ou les charges (5, 6) en vertu d'un signal de commutation (13) qui lui est acheminé;
un circuit de commande (14), qui, à l'état non sous tension, interrompt l'acheminement d'énergie à l'étage de commutation (7) et à la ou aux charges (5, 6), qui règle, à l'état sous tension, l'alimentation en énergie au moins de l'étage de commutation (7) et qui est également alimenté par le signal de commutation (21) pour passer entre un état non sous tension et un état sous tension;
un circuit de démarrage (17), qui permet d'acheminer au circuit de commande (14) l'énergie nécessaire au passage de l'état non sous tension à l'état sous tension, provenant d'une source (1), et qui est mis en service par le signal de commutation (21) pour l'alimentation en énergie du circuit de commande (14), et
un dispositif de transmission du signal de commutation (22) alimenté en énergie électrique nécessaire à son fonctionnement par le circuit de démarrage (17) pour transmettre le signal de commutation (13 ou 21) à l'étage de commutation (7) et au circuit de commande (14), caractérisé par une structure du type d'un bloc d'alimentation à découpage comportant un élément de commutation (31) commandé par le circuit de commande et un élément inductif (30) alimenté en énergie électrique par cet élément de commutation, bloc d'alimentation duquel, à l'état sous tension du circuit de commande (14), de l'énergie est tirée pour ce circuit pour le dispositif de transmission du signal de commutation et l'étage de commutation (7) et pour la ou les charges (5, 6), l'énergie destinée au circuit de commande (14) et au dispositif de transmission du signal de commutation (22) étant tirée d'un accumulateur d'énergie (18) qui est alimenté par le circuit de démarrage (17) ainsi que par l'élément inductif (30).

2. Dispositif d'alimentation en courant selon la revendication 1, caractérisé en ce que l'accumulateur d'énergie (18) est activé par le signal de commutation (21) pour le circuit de commande (14).

3. Dispositif d'alimentation en courant suivit la revendication 2, dans lequel le circuit de commande (14) adopte l'état non sous tension, lorsque la tension qui lui est acheminée par une connexion de tension d'alimentation (15) reste inférieure au moins une fois à une première valeur de seuil et ne dépasse pas une deuxième valeur de seuil plus élevée, et qui adopte un état sous tension lorsque la tension à la connexion de tension d'alimentation (15) dépasse la deuxième valeur de seuil au moins une fois et reste inférieure à la première valeur de seuil et dis lequel l'accumulateur d'énergie (18) se présente sous la forme d'une capacité et est relié à la connexion de tension d'alimentation (15), caractérisé en ce que l'accumulateur d'énergie (18) est ponté par un circuit limiteur de tension (172, 173) pouvant être commandé par le signal de commutation (21), lequel circuit limite la tension dans l'accumulateur d'énergie (18) à l'état non sous tension du circuit de commande (14) à une valeur immédiatement inférieure à la deuxième valeur de seuil.

4. Dispositif d'alimentation en courant selon la revendication 3, caractérisé par un signal de retour (25) délivré par au moins une des charges sous tension (5, 6), par lequel le circuit limiteur de tension (172, 173) est désactivé.

5. Dispositif d'alimentation en courant selon la revendication 1, 2, 3 ou 4 dis lequel le dispositif de transmission du signal de commutation comprend un étage récepteur (221, 222) pour recevoir le signal de commutation via une ligne de transmission (23) et le réacheminer à l'étage de commutation (7), caractérisé par un étage de mise en forme de signaux (225, 226, 227) par lequel le signal de commutation est acheminé au circuit limiteur de tension (172, 173).

6. Dispositif d'alimentation en courant selon la revendication 5, caractérisé en ce que l'étage récepteur (221, 222) est connecté à l'étage de commutation (7) via un étage de couplage (64) isolant galvaniquement le chemin suivi par le signal de commutation.

7. Dispositif d'alimentation en courant selon la revendication 4, 5 ou 6, caractérisé par un étage de surveillance (90) qui produit, lorsque ledit signal de retour (25) est absent, un signal d'interruption (91) pour faire passer le circuit de commande (14) à l'état non sous tension indépendamment de la tension appliquée à sa connexion de tension d'alimentation (15).
